# FASCICULE DE BREVET EUROPEEN

(11) **EP 0 429 599 B1**
(45) Date de publication et mention de la délivrance du brevet: **29.11.1995**
(21) Numéro de dépôt: 90908564.9
(22) Date de dépôt: 30.05.1990
(51) Int. Cl.: H02K 33/06, H02K 41/02

(54) **ACTIONNEUR ELECTROMAGNETIQUE MONOPHASE DE FAIBLE ENCOMBREMENT**
EINPHASIGER ELEKTROMAGNETISCHER BETÄTIGER MIT GERINGEM RAUMBEDARF
COMPACT MONOPHASE ELECTROMAGNETIC SOLENOID

(30) Priorité: 16.06.1989 FR 8908051
(43) Date de publication de la demande: 05.06.1991
(73) Titulaire: MOVING MAGNET TECHNOLOGIES S.A., 25000 Besançon (FR)
(72) Inventeur: OUDET, Claude, F-25000 Besançon (FR); PRUDHAM, Daniel, F-25220 Thise (FR)
(74) Mandataire: Kopacz, William James
(86) Numéro de dépôt international: FR9000376
(87) Numéro de publication internationale: WO9016109

(56) Documents cités:
- DE-A- 3 037 648
- US-A- 3 536 941

## Description

La présente invention concerne un actionneur électromagnétique monophasé présentant au moins une position stable en l'absence de courant, et comportant un organe mobile et une structure statorique du type selon lequel l'organe mobile comprend une partie aimantée perpendiculairement à la direction de son déplacement, l'épaisseur de la partie aimantée étant faible par rapport à ses autres dimensions. La structure statorique comporte deux circuits magnétiques réalisés en un matériau de très haute perméabilité magnétique et présente un entrefer dans lequel est disposée au moins une portion de la partie aimantée. La structure statorique comporte au moins une bobine électrique d'excitation couplée avec ledit circuit magnétique.

La demande de brevet internationale CH-8700063 déposée le 1er juin 1987 sous priorité de la demande de brevet Suisse 222886 déposée le 2 juin 1986 numéro de publication WO-A-8707757 décrit un dispositif d'actionnement électromagnétique permettant d'effectuer un déplacement de l'organe mobile sur une distance limitée à force sensiblement constante.

Ce dispositif est en particulier destiné à actionner la tête de lecture-écriture d'une mémoire à disque rotatif tel qu'un disque dur, un disque magnétique ou un disque optique.

Le brevet WO87/07757 et le brevet US3536941 divulguent des actionneurs présentant les caractéristiques techniques du préambule de la revendication 1 du présent brevet.

Ces dispositifs de l'art antérieur présentent plusieurs inconvénients majeurs. En premier lieu, la fermeture des circuits magnétiques est réalisée par des joints magnétiques disposés soit à l'arrière de la structure statorique, c'est à dire perpendiculairement au chemin de déplacement de l'organe mobile, soit dans des plans parallèles au chemin de déplacement de l'organe mobile. Dans les deux cas, l'encombrement de la structure statorique s'en trouve augmenté notablement, ce qui peut être préjudiciable dans certaines applications de micro-mécanique où les contraintes de volume sont critiques. De tels actionneurs sont en particulier mis en oeuvre dans des lecteurs de disques durs pour le déplacement de la tête de lecture. La miniaturisation toujours plus poussée ne permet pas l'utilisation d'actionneur comportant une structure statorique fermée. Par ailleurs, on souhaite dans de nombreuses applications que l'organe mobile se maintienne dans une position stable en l'absence de courant d'excitation de la bobine électrique. La force de verrouillage de l'organe mobile dans cette position stable doit toutefois être contrôlée de façon à éviter un collage excessif qui perturberait le fonctionnement normal de l'actionneur. Cette caractéristique est par exemple recherchée lorsque l'actionneur est destiné à commander une plume de table traçante. Dans ce cas, il est souhaitable que la plume traçante reste, en l'absence du courant, en position levée, c'est-à-dire décollée du papier après que le courant ait amené la plume en position haute.

Dans les dispositifs connus dans l'état de la technique, on utilise un ressort de force définie et de très faible raideur pour obtenir ce résultat. Cette solution n'est néanmoins pas totalement satisfaisante car la force du ressort agit de façon permanente. Elle vient donc perturber la force exercée par l'actionneur électromagnétique. Par ailleurs, la dispersion des caractéristiques physiques d'une famille de ressorts théoriquement identiques introduit des variations de la force d'écriture dépassant les tolérances admissibles dans le cas où la force d'écriture est faible. A titre d'exemple, si la force d'écriture recommandée pour une plume est d'environ 0,5 Newton, et si le ressort est taré à 0,8 Newton avec une tolérance de plus ou moins 0,1 Newton, cette tolérance va engendrer une variation de plus ou moins 20% de la force d'écriture.

La présente invention a pour but de remédier à ces inconvénients en proposant un dispositif actionneur permettant d'exercer une force constante sur une grande plage de déplacement utile, d'un encombrement minimal et présentant une impulsion en fin de course aboutissant à un "collage" de l'organe mobile dans cette position, une fois que le courant l'y ait amené, et dont il pourra aussi ultérieurement le faire sortir.

A cet effet, l'actionneur électromagnétique monophasé selon la présente invention comporte un organe mobile présentant au moins une partie mince aimantée perpendiculairement à la direction de son déplacement ainsi qu'une structure statorique définissant un entrefer. Cet entrefer est compris entre d'une part un premier circuit magnétique réalisé en un matériau de très haute perméabilité magnétique et comportant au moins une bobine électrique d'excitation parcourue par un courant, orientée perpendiculairement à la direction de déplacement de l'organe mobile ainsi qu'à la direction d'aimantation de la partie aimantée dudit organe mobile, et d'autre part un deuxième circuit magnétique réalisé en un matériau de très haute perméabilité magnétique. L'organe mobile présente une partie aimantée réalisée en un matériau dont la caractéristique de désaimantation est pratiquement linéaire sur la plus grande partie du domaine de travail et dont la perméabilité réversible est proche de celle de l'air. La partie aimantée présente deux paires de pôles magnétiques aimantés selon des directions opposées l'aimantation est pratiquement uniforme et s'étend sur une longueur YA mesurée le long du chemin de déplacement de l'organe mobile. La structure statorique comporte, au moins d'un côté de l'entrefer, une partie polaire centrale de longueur Y₂ mesurée le long du même chemin de déplacement, et deux parties polaires latérales de longueur Y₁ et Y₃ mesurées le long du même chemin de déplacement, les longueurs des parties polaires Y₁, Y₂ et Y₃ étant sensiblement et au moins égales à YA, diminuée de la largeur de l'encoche dans laquelle sont positionnés les fils du bobinage. Les deux circuits magnétiques constituant la partie statorique ne sont pas réunis par des joints magnétiques mais par des entretoises non magnétiques. La course de l'organe mobile est au plus égale à la moins longue des parties polaires. De préférence, la course de l'organe mobile de part et d'autre d'une position médiane est inférieure à la moitié de la différence entre la longueur totale du circuit magnétique le plus court mesuré entre ses deux arêtes latérales extérieures et la longueur totale des parties aimantées. De façon surprenante, l'actionneur ainsi réalisé fourni une force quasiment constante sur le chemin de déplacement de l'organe mobile malgré l'absence de fermeture des circuits magnétiques, à condition que les sections de passage de flux dans le fer soient suffisantes au niveau des encoches où sont disposés les fils de bobine.

Selon un mode de réalisation avantageux de la présente invention, l'une au moins des parties polaires présente un chanfrein perpendiculaire à la direction de déplacement de l'organe mobile. Une butée interdit le déplacement de la partie aimantée dans la zone d'extrémité dans laquelle la force de détente décroît.

Selon une variante du mode de réalisation précédent, l'une au moins des arêtes latérales de l'un au moins des circuits magnétiques et le bord latéral correspondant de la partie aimantée forment entre eux un angle compris entre 0 et 10 degrés. Par arête latérale, il faut entendre l'arête sensiblement perpendiculaire à la direction de déplacement et à la direction de l'aimantation.

Ce chanfrein ou cette bande latérale inclinée permet de régler l'effet de bord assurant une force de maintien au moins à l'une des extrémités de la course de l'organe mobile. Le dispositif selon la présente invention résout ainsi de façon particulièrement élégante le problème consistant à obtenir une position stable en l'absence de courant, sans qu'il ne soit nécessaire d'ajouter aucune pièce mécanique tel qu'un ressort. Les dispositifs selon la présente invention trouvent de nombreuses applications, par exemple pour le déplacement vertical d'une plume de table traçante, d'une soupape d'orgue ou d'une vanne hydraulique. Le dispositif selon la présente invention peut être réalisé sous de nombreuses formes, la structure statorique ainsi que l'organe mobile pouvant présenter diverses formes géométriques.

De préférence, la butée est disposée dans la partie extérieure, à une distance mesurée le long du chemin de déplacement et en direction du centre de l'actionneur inférieure à la largeur E de l'entrefer.

Selon un mode de réalisation particulier, la partie aimantée est de forme cylindrique et présente 2N parties coaxiales aimantées, radialement en sens alternés. La partie aimantée se déplace dans un entrefer tubulaire délimité par le premier circuit magnétique et le second circuit magnétique.

Par cylindrique ou tubulaire il faut entendre une structure de section quelconque, par exemple circulaire, carré, polygonale etc... Selon une variante, le second circuit est constitué par un cylindre de matériau de très haute perméabilité, solidaire de la partie aimantée cylindrique. La longueur du circuit magnétique cylindrique est au moins égale à la somme de la longueur du premier circuit magnétique et de la course de l'axe mobile.

Selon un mode de réalisation avantageux, en particulier pour des actionneurs de grandes dimensions lorsque le mobile est constitué par une structure comportant deux aimants minces parallèles présentant chacun 2N parties aimantées perpendiculairement aux demandes de déplacement, les aimants minces étant reliées par des entretoises, le volume compris entre les deux aimants minces étant au moins partiellement rempli avec un matériau de très haute perméabilité magnétique. L'organe mobile ainsi réalisé présente une grande rigidité.

L'actionneur électromagnétique réalisé selon cette variante présente de grandes facilités d'assemblage.

Avantageusement, le premier circuit magnétique et le second circuit magnétique sont symétriques par rapport au plan médian de la partie aimantée de l'organe mobile perpendiculairement à la direction d'aimantation.

Le deuxième circuit magnétique peut ne pas comporter de pôle statorique discret. On réduit par ce mode de réalisation la raideur et l'amplitude de la force s'exerçant sur la partie aimantée lorsque celle-ci se trouve en butée d'extrémité.

Avantageusement, le rapport entre la longueur Y_{A} de la partie aimantée et l'épaisseur E de l'entrefer est supérieur à 4. On obtient ainsi une zone étendue dans laquelle la force est constante.

Selon une variante, la partie aimantée se présente sous la forme de deux portions de paroi de faible épaisseur d'un cylindre de section circulaire, lesdites portions étant symétriques par rapport à la génératrice centrale et aimantées radialement selon des sens opposés, le déplacement de l'organe mobile étant dans ce cas un déplacement angulaire autour de l'axe dudit cylindre.

Selon un mode de réalisation avantageux, le chanfrein présente une longueur comprise entre 1/5 et 1/20 de la longueur de la partie polaire correspondante.

Selon un autre mode de réalisation, l'organe mobile est constitué par un secteur de disque comportant une partie aimantée perpendiculairement au plan dudit disque. La partie aimantée présente 2N secteurs angulaires, d'une couronne coaxiale avec ledit disque, aimantés en sens alterné.

L'un au moins des circuits magnétiques présente 2N+1 parties polaires formées par des secteurs angulaires dont la dimension angulaire correspond à la dimension des secteurs angulaires aimantés.

On réalise ainsi un actionneur plat rotatif de très faible encombrement en raison de l'absence de matériau magnétique de fermeture des flux magnétiques. De tels actionneurs angulaires sont particulièrement adaptés à l'actionnement d'un bras de support de tête d'un lecteur de disque dur.

La présente invention sera mieux comprise dans ce qui suit et en considérant les dessins où
- la figure 1 représente une vue en coupe médiane d'un actionneur linéaire selon la présente invention,
- la figure 2 représente une vue en coupe d'une variante d'exécution
- la figure 3 représente une vue en coupe d'une seconde variante
- la figure 4 représente une vue en coupe médiane d'un actionneur rotatif cylindrique selon la présente invention,
- la figure 5 représente une vue en coupe d'une variante d'actionneur rotatif.
- la figure 6 représente les courbes force-déplacement,
- la figure 7 représente une vue en coupe d'un actionneur linéaire cylindrique.

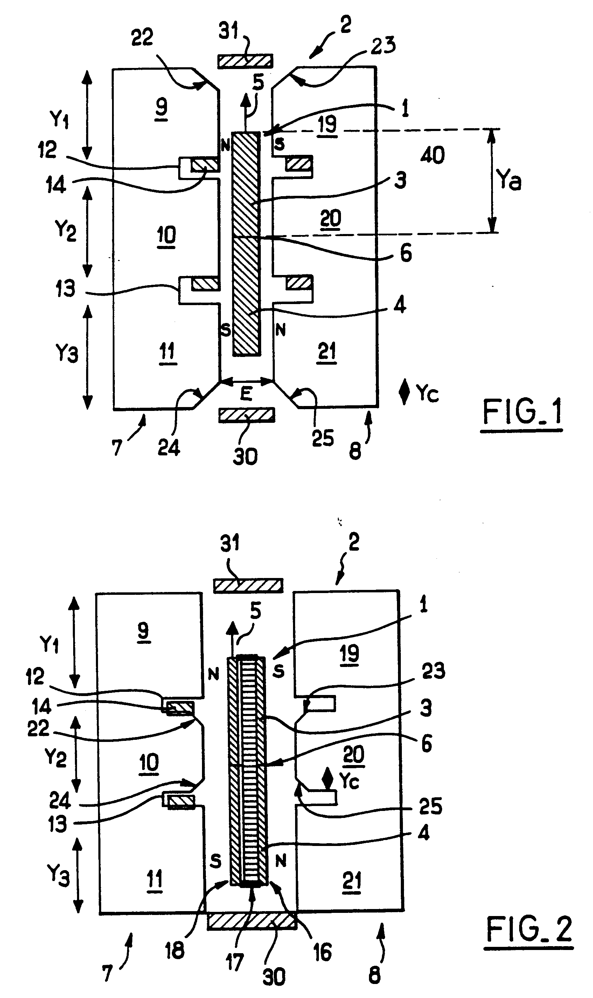

La figure 1 représente une vue d'un exemple de réalisation de la présente invention. Il s'agit d'un actionneur linéaire comportant un organe mobile (1) et une structure statorique (2). L'organe mobile (1) est constitué par deux parties aimantées (3, 4). Ces parties aimantées (3, 4) sont constituées par des aimants minces aimantés perpendiculairement à la direction de déplacement représentée par la flèche (5). La partie aimantée (1) peut être réalisée par deux aimants minces accolés de long d'une ligne de jonction (6). La partie aimantée (1) peut également être réalisée à partir d'un matériau ferromagnétique monolithique, dans lequel on induit deux zones d'aimantation opposées. Dans ce dernier cas, il existera une zone de transition médiane.

La structure statorique comporte un premier circuit magnétique (7) et un deuxième circuit magnétique (8) définissant entre eux un entrefer dont la largeur E est ajustée par une entretoise constituée par une baguette non magnétique disposée perpendiculairement à la direction de déplacement de l'organe mobile (3). Des vis de serrage non représentées sur la figure 1 assurent le blocage de la structure statorique ainsi réalisée. Selon un autre mode de réalisation non représenté sur la figure 1, les deux circuits magnétiques (7, 8) sont maintenus dans une coquille en matière plastique rigide constituant le boîtier extérieur de l'actionneur. Les circuits magnétiques (7, 8) sont réalisés en un matériau de très haute perméabilité magnétique tel que le fernickel. Le premier circuit magnétique (7) présente trois parties polaires, une partie polaire centrale (10) et deux parties polaires latérales (9, 11). Deux encoches (12, 13) permettent de loger les brins de la bobine d'excitation électrique (14) . Le deuxième circuit magnétique (8) est symétrique au premier circuit magnétique (7) par rapport au plan médian de la partie mobile (1).

Les deux circuits magnétiques sont réunis par des entretoises non magnétiques et le dispositif ne comporte aucune pièce magnétique de fermeture des flux magnétiques.

Les circuits magnétiques (7, 8) comportent le long des arêtes extérieures des parties polaires latérales (9, 11, 19, 21) des chanfreins (22, 23, 24, 25). Ces chanfreins (22 à 25) consistent en une bande d'une longueur Y_{C}, perpendiculaire à la direction de déplacement de l'organe mobile (1) et à la direction d'aimantation des parties aimantées (3, 4). Ces chanfreins (22 à 25) forment avec le plan perpendiculaire à la direction d'aimantation des parties aimantées (3, 4) un angle d'environ 30°. La valeur de cet angle n'est donnée qu'à titre d'exemple. Si la longueur Y_{C} de chanfrein est faible, ou si l'angle est faible, la force de détente s'exerçant sur l'organe mobile, lorsque celui-ci arrive en bout de course, est importante. Par contre, si la longueur Y_{C} des chanfreins (22 à 25) est importante et si l'angle est également important, la force de détente s'exerçant sur l'organe mobile sera plus douce. L'homme du métier sera à même de déterminer les conditions optimales pour l'usage recherché. Ce compromis dépendra de la force de verrouillage recherchée, de la tolérance admissible sur la zone de force constante et sur la puissance admissible pour réaliser le décollage de l'organe mobile lorsque celui-ci est en bout de course. Des butées (30, 31) limitent la course de l'organe mobile et l'empêche de dépasser une position dans laquelle la force de détente devient décroissante après être passée par son maximum, c'est-à-dire entraînerait l'organe mobile vers la position de symétrie. Il est bien entendu que le chanfrein peut être réalisé sous forme d'une arête arrondie.

Y₁ et Y₃ sont les longueurs des parties polaires latérales du premier circuit magnétique (7). Dans la plupart des cas, mais non exclusivement, Y₁ et Y₃ seront égaux. Y₂ est la longueur de la partie magnétique centrale (10) située entre les rainures (12, 13) dans lesquelles sont positionnées les spires de la bobine d'excitation (12).

Dans l'exemple décrit, la longueur Y₁ de la partie magnétique latérale (9) est égale à la longueur Y₂ de la partie centrale (10) augmentée de la largeur E de l'entrefer. La longueur Y_{A} de la partie aimantée est égale à la longueur Y₂ de la partie magnétique centrale (10) augmentée de la longueur de l'encoche contenant la bobine.

Une variante d'exécution, non représentée, consiste à "enrouler" la structure représentée en figure 1 autour de son axe OY. On aboutit ainsi à une configuration dans laquelle l'organe mobile est constitué de deux parties aimantées (3, 4) de forme tubulaire et d'aimantation radiale alternée. Le premier circuit magnétique (7) présente trois parties polaires superposées (9, 10, 11) de forme annulaire. Deux des arêtes circulaires (22, 24) présentent un chanfrein (22, 24). Le deuxième circuit magnétique (8) est constitué par un cylindre réalisé en un matériau de haute perméabilité magnétique. Ce cylindre (8) est solidaire des parties aimantées (3, 4) dont il constitue le noyau. Une douille à bille assure le guidage de l'organe mobile (1). Des butées (30, 31) représentées schématiquement limitent le débattement maximum de l'organe mobile (1).

La figure 2 représente un actionneur linéaire dans lequel l'organe mobile est constitué par une structure composite comportant deux aimants minces (16, 18) reliés par des entretoises (17). Le volume compris entre les deux aimants minces parallèles (16, 18) est rempli par un matériau de très haute perméabilité magnétique. Ce mode de réalisation est particulièrement recommandé pour des actionneurs de grande dimension pour lesquels l'organe mobile peut présenter des problèmes de rigidité. Ce mode de réalisation n'est bien sûr pas limité aux actionneurs linéaires comportant un organe mobile plan, mais peut être mis en oeuvre dans des actionneurs rotatifs, ou encore dans des actionneurs cylindriques linéaires.

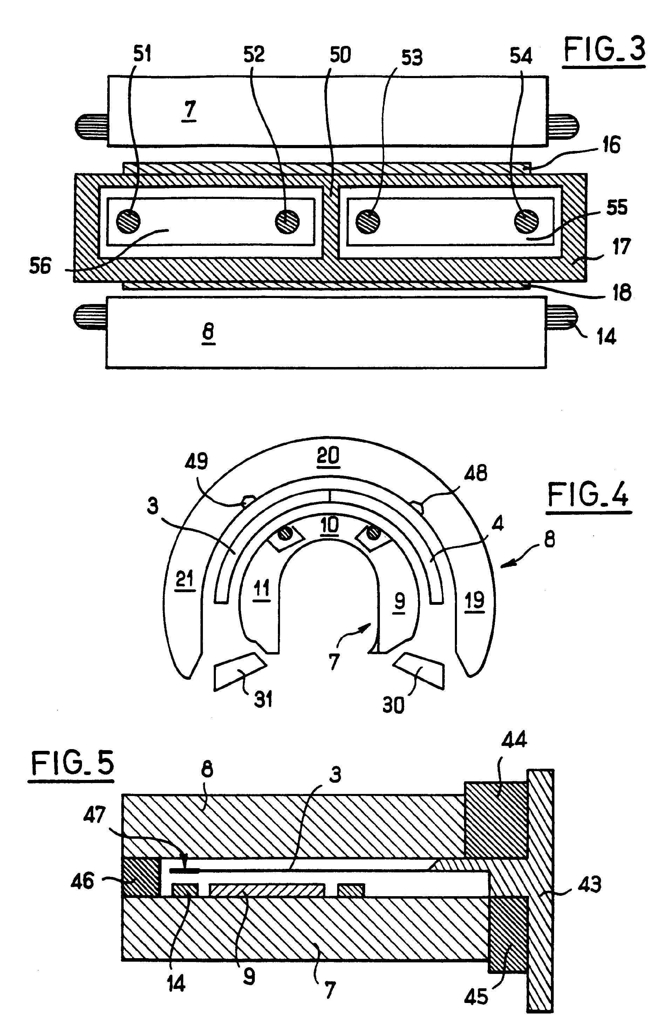

La figure 3 représente une vue en coupe d'un actionneur linéaire comportant une structure statorique formée par deux circuits magnétiques (7, 8) et un organe mobile formé par deux aimants minces (16, 18) parallèles reliés par un support d'aimant (17) réalisé en un matériau rigide tel que de la fibre de carbone ou de l'acier inoxydable.

Le support d'aimant présente des nervures de renfort (50) disposées dans le plan perpendiculaire au plan de l'aimant mince (16, 18).

L'ensemble de l'organe mobile constitué par les deux aimants parallèles (16, 18) et par le support d'aimant (17) coulisse en translation. Le guidage est assuré par des colonnes rigides fixes (51, 54) disposées à l'intérieur du support d'aimant (17). Ces colonnes (51, 54) coopèrent avec des douilles à billes disposées aux deux extrémités du support d'aimant (17). Les volumes creux du support d'aimant (17) sont occupés par un matériau de très haute perméabilité constituant des stators intermédiaires (55, 56) . Ces stators intermédiaires sont dans l'exemple décrit solidaire des colonnes de guidage (51 à 54) et sont disposés perpendiculairement à la ligne de jonction des deux parties aimantées et à la direction de l'aimantation. Il est bien entendu que l'on pourrait prévoir un guidage différent par exemple, avec des colonnes solidaires du support d'aimant (17) et coopérant avec des douilles à billes fixes. L'actionneur peut également être "enroulé" autour d'un axe parallèle à l'axe de translation pour fournir un actionneur linéaire cylindrique ou semi-cylindrique

La figure 4 représente un actionneur rotatif comportant un premier circuit magnétique (8) occupant un secteur angulaire d'un cylindre à section circulaire. L'organe mobile est constitué par deux parties aimantées (3, 4) ayant une forme de tuile, c'est-à-dire, la forme d'une paroi de cylindre. Ces deux parties sont aimantées radialement en sens alterné. Le premier circuit magnétique (7) est coaxial avec l'organe mobile et avec le deuxième circuit magnétique (8). Il présente également une forme cylindrique et comporte trois pôles (9, 10, 11). Une bobine d'excitation électrique est disposée dans les encoches prévues entre deux pôles consécutifs. Des butées (30, 31) limitent la course de l'organe mobile. Des usinages (48, 49) disposés symétriquement par rapport aux encoches du premier circuit magnétique (7) assurent un équilibre des forces exercées sur l'organe mobile.

L'actionneur rotatif représenté en figure 5, comporte 2N parties aimantées transversalement, en sens alternés, dont la forme correspond à des secteurs angulaires d'un disque mince. La structure statorique est constituée par un premier circuit magnétique (7) et un deuxième circuit magnétique (8). Le premier circuit magnétique (7) est constitué par un matériau de haute perméabilité magnétique dont la forme correspondant à un secteur angulaire de disque épais. Le deuxième circuit magnétique présente une forme complémentaire. Le premier circuit magnétique (7) comporte des pôles magnétiques entourés d'une bobine (14). La forme des ces pôles magnétiques (9) correspond à des secteurs angulaires annulaires. Les deux circuits magnétiques (7, 8) sont reliés par une entretoise annulaire (46) non magnétique. L'aimant mince (3) est maintenu par un cadre rigide (47) coopérant avec une structure axiale (43) guidée par deux douilles à bille (44, 45) . Comme précédemment, lorsque la structure statorique comporte plus de trois pôles magnétiques, il est possible d'entourer l'un des pôles magnétiques avec une bobine électrique servant non pas à l'excitation mais à l'asservissement.

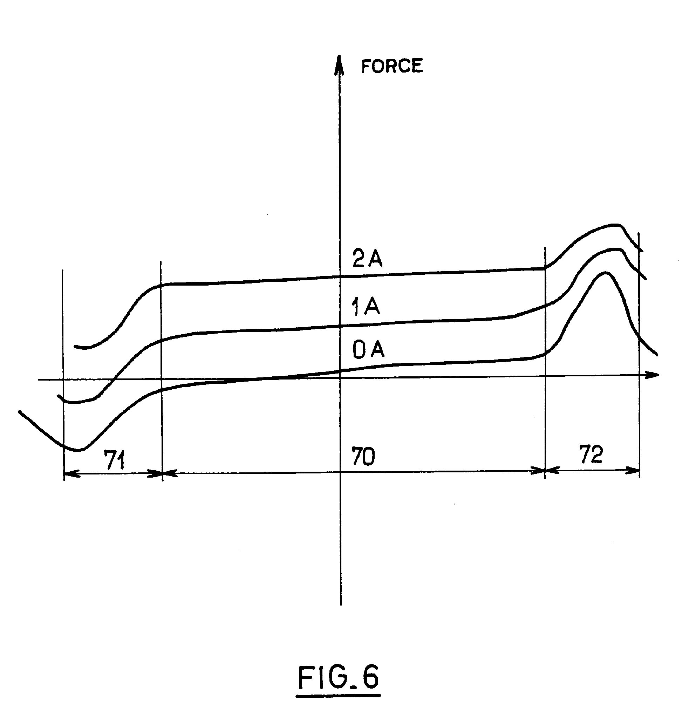

La figure 6 représente la courbe force-déplacement en fonction des différentes tensions d'alimentation de la bobine d'excitation (12). Lorsque le déplacement est supérieur à la zone (70) dans laquelle la force est constante, on arrive à une zone (71 ou 72) dans laquelle règne une force de détente tendant à assurer un déplacement supplémentaire, qui sera limité par les butées (30, 31). Ces zones (71, 72) dans lesquelles existent une force de détente persistent lorsque l'intensité du courant alimentant la bobine (12) est nulle. Si l'on augmente la taille des chanfreins (22 à 25), on diminue la zone (70) dans laquelle règne une force constante. Si l'on supprimait ces chanfreins (22 à 25), on aboutirait à un collage de l'organe mobile en fin de course. Dans ce cas, le décollage nécessiterait un courant élevé préjudiciable au bon fonctionnement de l'actionneur.

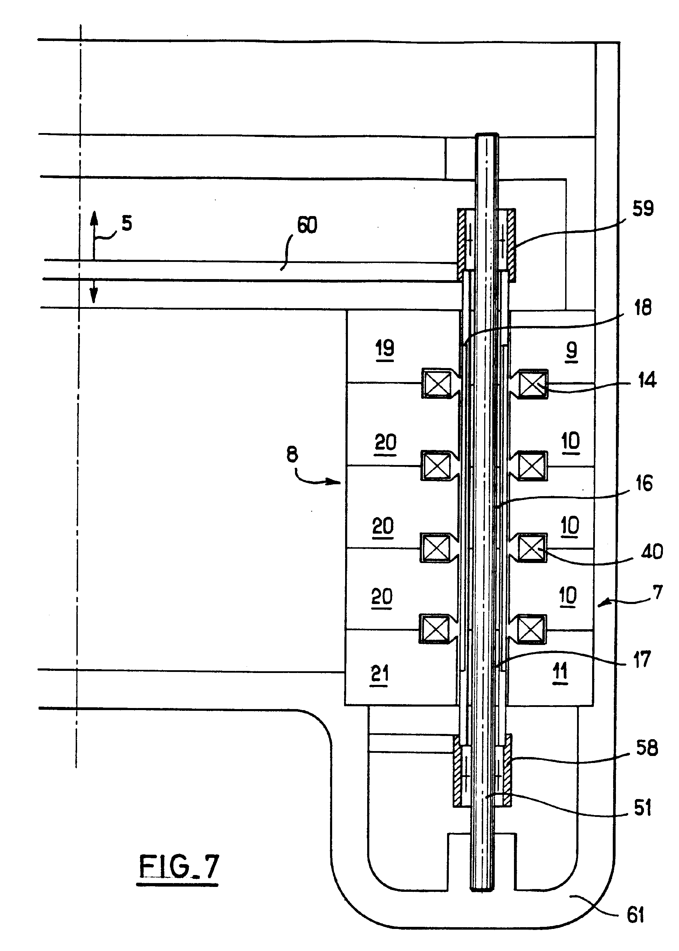

La figure 7 représente un actionneur linéaire de forme cylindrique, de grand diamètre. La structure statorique est constituée par une multitude de parties polaires (19,20,21) superposées. Elle comprend des bobines d'excitation (14) ainsi que des bobines auxiliaires d'asservissement (40) . L'organe mobile est constitué par un support d'aimant (17) comportant des entretoises disposées selon des plans radiaux. Sur ce support d'aimants sont collés des aimants minces (16,18) parallèles. Suivant la taille du dispositif, il peut s'agir d'aimants minces cylindriques ou encore d'une pluralité d'aimants minces collés sur le support non magnétique (17) afin de former les facettes d'un polygone. Le support d'aimants (17) est constitué par un matériau rigide tel que de l'acier inoxydable non magnétique. A chaque extrémité, il comporte une série de douilles à billes (58,59) coopérant avec des colonnes de guidage (51) fixes. Ces colonnes de guidage (51) sont fixées sur un bâti (61) et forment une sorte de cage cylindrique à barreaux. Les différentes douilles à billes supérieures (59) sont reliées par une pièce de liaison (60) formée par un disque plein rigide. Cette pièce de liaison (60) sert à transmettre le mouvement linéaire suivant la direction indiquée par la flèche (5). Il est bien sûr possible de prévoir le long de certaines arêtes polaires un chanfrein ou un bord incliné pour régler le verrouillage. Bien entendu, les deux circuits polaires ne sont en aucun point reliés par des pièces magnétiques.

Il est bien entendu que les modes d'exécution décrits dans ce qui précède ne sont en aucune façon limitatifs. En particulier, le nombre de parties polaires n'est pas limité à trois mais peut être supérieur. De la même façon, il est possible de ne prévoir qu'une seule bande chanfreinée, ou au contraire une pluralité d'arêtes munies de chanfreins.

## Revendications

1. Actionneur électromagnétique monophasé présentant au moins une position stable en l'absence de courant, ledit actionneur comportant une structure statorique et un organe mobile (1) selon une direction Y, la structure statorique (2) définissant un entrefer compris entre un premier circuit magnétique (7) réalisé en un matériau de très haute perméabilité et comportant une bobine électrique d'excitation (14) et par un deuxième circuit magnétique (8), le premier circuit magnétique (7) comportant une partie polaire centrale (10) de longueur Y₂ mesurée selon la direction Y de déplacement de l'organe mobile (1) et deux parties polaires latérales (9, 11) de longueur Y₁ et Y₃ mesurées selon la direction Y de déplacement de l'organe mobile (1), l'organe mobile (1) comportant une partie (3, 4) mince aimantée perpendiculairement à la direction de déplacement formant deux paires de pôles magnétiques opposés d'une longueur Y_{A} mesurée dans le sens de déplacement de l'organe mobile (1), ladite partie (3, 4) mince aimantée étant réalisée en un matériau présentant dans tout le domaine de travail une caractéristique de désaimantation pratiquement linéaire, une perméabilité réversible proche de celle de l'air et une aimantation uniforme, caractérisé en ce que les longueurs des parties polaires Y₁, Y₂ et Y₃ sont au moins égales à la longueur Y_{A} de la paire de pôles magnétiques diminuée de la longueur de l'encoche où est logée la bobine, et en ce que le premier circuit magnétique (7) et le second circuit magnétique (8) sont réunis uniquement par des pièces non magnétiques, la course de l'organe mobile (1) de part et d'autre d'une position médiane étant inférieure à la moitié de la différence entre la longueur totale du circuit magnétique le plus court mesuré entre ses deux arêtes latérales extérieures et la longueur totale des parties aimantées (3, 4).

2. Actionneur électromagnétique monophasé selon la revendication 1, caractérisé en ce que l'organe mobile (1) est constitué par un secteur angulaire d'un disque présentant deux secteurs angulaires aimantés transversalement en sens alternés, le premier circuit magnétique (7) est constitué par un secteur angulaire d'un anneau de matériau de très haute perméabilité présentant trois parties de mêmes dimensions angulaires que les secteurs angulaires aimantés, le premier circuit magnétique (7) comportant une bobine électrique d'excitation (14) et par un deuxième circuit magnétique (8), lesdits circuits magnétiques étant reliés par des entretoises non magnétiques.

3. Actionneur électromagnétique monophasé selon la revendication 1, caractérisé en ce que la partie aimantée est de forme tubulaire et présente une première partie cylindrique à section quelconque au lieu de tubulaire (3) aimantée radialement et une deuxième partie (4) coaxiale prolongeant la première partie (3) aimantée radialement en sens alterné, ladite partie mobile se déplaçant axialement dans l'entrefer délimité par le premier circuit magnétique (7) et le second circuit magnétique (8).

4. Actionneur électromagnétique monophasé selon la revendication 3, caractérisé en ce que le second circuit magnétique (8) est constitué par un cylindre de matériau de très haute perméabilité magnétique.

5. Actionneur électromagnétique monophasé selon la revendication 4, caractérisé en ce que ledit cylindre est solidaire de la partie aimantée cylindrique (3, 4) la longueur du circuit magnétique (8) cylindrique étant au moins égale à la somme de la longueur du premier circuit magnétique (7) et de la course de l'axe mobile.

6. Actionneur électromagnétique monophasé selon la revendication 1, caractérisé en ce que la partie aimantée est constituée par au moins deux portions de paroi cylindrique mince, symétriques par rapport à la génératrice médiane, lesdites, portions étant aimantées radialement en sens alterné, ledit organe mobile (1) étant mobile en rotation autour de l'axe central dudit cylindre.

7. Actionneur électromagnétique monophasé selon les revendications 1 à 6, caractérisé en ce que l'organe mobile (1) est constitué par deux aimants minces parallèles présentant chacun deux parties aimantées (3, 4) transversalement en sens alterné, reliées par un support d'aimant (17), le volume compris entre lesdits aimants minces étant au moins partiellement rempli par un matériau de très haute perméabilité magnétique.

8. Actionneur électromagnétique monophasé selon la revendication 1 à 7, caractérisé en ce que le guidage du support d'aimant (17) est assuré par des colonnes (51, 54) disposées à l'intérieur du support d'aimant (17) coopérant avec des douilles à billes.

9. Actionneur électromagnétique monophasé selon les revendications 1 à 8, caractérisé en ce que l'un au moins des circuits magnétiques (7, 8) présente sur au moins l'une de ses arêtes perpendiculaires à la direction de déplacement de l'organe mobile (1) et à la direction de l'aimantation, un chanfrein (22), l'actionneur comportant en outre une butée (30) interdisant le déplacement de la partie aimantée au-delà de la zone d'extrémité dans laquelle la force de détente décroît.

10. Actionneur électromagnétique monophasé selon les revendications 1 à 9, caractérisé en ce que la longueur Y₂ de la partie polaire centrale (10) est inférieure aux longueurs Y₁ et Y₃ des parties polaires latérales (9, 11).

11. Actionneur électromagnétique selon l'une quelconque des revendications 1 à 10, caractérisé en ce que la butée est disposée à une distance mesurée à compter de l'arête latérale extérieure du circuit magnétique le plus court inférieure à la largeur E de l'entrefer.

12. Actionneur électromagnétique selon l'une quelconque des revendications 1 à 11, caractérisé en ce que le premier circuit magnétique (7) et le second circuit magnétique (8) sont symétriques par rapport au plan médian de la partie aimantée de l'organe mobile (1) perpendiculaire à la direction d'aimantation.

13. Actionneur électromagnétique monophasé selon l'une quelconque des revendications précédentes, caractérisé en ce que le rapport entre la longueur Y_{A} de la partie aimantée et l'épaisseur E de l'entrefer est supérieur à 4.

14. Actionneur électromagnétique monophasé selon l'une quelconque des revendications précédentes, caractérisé en ce que la longueur, mesurée dans le sens de la direction de déplacement de l'organe mobile (1), du chanfrein (22) est comprise entre 1/5 et 1/20 de la longueur Y₁ de la partie polaire correspondante.

15. Actionneur électromagnétique monophasé selon l'une quelconque des revendications 1 à 14, caractérisé en ce que l'une au moins des arêtes latérales de l'un au moins des circuits magnétiques (7, 8) et le bord latéral correspondant de la partie aimantée forment entre eux un angle compris entre 0 et 10 degrés.

## Patentansprüche

1. Einphasiges elektromagnetisches Betätigungselement, das mindestens eine stabile Position in Abwesenheit von Strom aufweist, wobei das Betätigungselement eine Statorstruktur umfaßt sowie ein Organ (1), das in einer Richtung Y beweglich ist, wobei die Statorstruktur (2) einen Luftspalt umgrenzt, der sich zwischen einem ersten Magnetkreis (7), welcher aus einem Material von sehr hoher Permeabilität gefertigt ist und eine elektrische Erregerspule (14) umfaßt, und einem zweiten Magnetkreis (8) befindet, wobei der erste Magnetkreis (7) einen mittleren Polteil (10) mit einer Länge Y₂, gemessen in der Richtung Y der Verschiebung des beweglichen Organs (1), und zwei seitliche Polteile (9, 11) mit einer Länge Y₁ und Y₃, gemessen in der Richtung Y der Verschiebung des beweglichen Organs (1), aufweist, wobei das bewegliche Organ (1) einen dünnen Teil (3, 4) umfaßt, der senkrecht zur Verschiebungsrichtung magnetisiert ist und zwei Paare von gegensätzlich magnetisierten Polen mit einer Länge Y_{A}, gemessen in der Verschiebungsrichtung des beweglichen Organs (1), bildet, wobei der genannte magnetisierte dünne Teil (3, 4) aus einem Material gefertigt ist, das im gesamten Arbeitsbereich eine praktisch lineare Entmagnetisierungscharakteristik, eine reversible Permeabilität, die derjenigen von Luft sehr nahe kommt, und eine gleichförmige Magnetisierung aufweist, dadurch gekennzeichnet, daß die Längen der Polteile Y₁, Y₂ und Y₃ mindestens der Länge Y_{A} des Magnetpolpaares, verringert um die Länge der Aussparung, wo sich die Spule befindet, entsprechen und daß der erste Magnetkreis (7) und der zweite Magnetkreis (8) nur durch nicht magnetische Teile verbunden sind, wobei der Weg des beweglichen Organs (1) zu beiden Seiten einer mittleren Position kleiner ist als die Hälfte der Differenz zwischen der Gesamtlänge des kürzesten Magnetkreises, gemessen zwischen seinen beiden äußeren seitlichen Kanten, und der Gesamtlänge der magnetisierten Teile (3, 4).

2. Einphasiges elektromagnetisches Betätigungselement nach Anspruch 1, dadurch gekennzeichnet, daß das bewegliche Organ (1) von einem Winkelsektor einer Scheibe gebildet wird, der zwei Winkelsektoren aufweist, welche quer in wechselnder Richtung magnetisiert sind, daß der erste Magnetkreis (7) von einem Winkelsektor eines Rings aus einem Material von sehr hoher Permeabilität gebildet wird, der drei Teile mit den gleichen Winkelabmessungen wie die magnetisierten Winkelsektoren aufweist, wobei der erste Magnetkreis (7) eine elektrische Erregerspule (14) umfaßt, und durch einen zweiten Magnetkreis (8), wobei die Magnetkreise durch nicht magnetische Zwischenstücke verbunden sind.

3. Einphasiges elektromagnetisches Betätigungselement nach Anspruch 1, dadurch gekennzeichnet, daß der magnetisierte Teil röhrenförmig ist und einen ersten zylindrischen Abschnitt mit beliebigem Querschnitt anstelle eines röhrenförmigen (3), welcher radial magnetisiert ist, und einen zweiten, koaxialen Abschnitt (4) aufweist, der sich an den ersten Abschnitt (3) anschließt und radial in wechselnder Richtung magnetisiert ist, wobei sich der bewegliche Teil axial in dem Luftspalt bewegt, der von dem ersten Magnetkreis (7) und dem zweiten Magnetkreis (8) umgrenzt wird.

4. Einphasiges elektromagnetisches Betätigungselement nach Anspruch 3, dadurch gekennzeichnet, daß der zweite Magnetkreis (8) von einem Zylinder aus einem Material von sehr hoher magnetischer Permeabilität gebildet wird.

5. Einphasiges elektromagnetisches Betätigungselement nach Anspruch 4, dadurch gekennzeichnet, daß der Zylinder fest mit dem zylindrischen magnetisierten Teil (3, 4) verbunden ist, wobei die Länge des zylindrischen Magnetkreises (8) mindestens der Summe der Länge des ersten Magnetkreises (7) und des Wegs der beweglichen Achse entspricht.

6. Einphasiges elektromagnetisches Betätigungselement nach Anspruch 1, dadurch gekennzeichnet, daß der magnetisierte Teil von mindestens zwei Abschnitten einer dünnen zylindrischen Wand gebildet wird, die in bezug auf die mittlere Mantellinie symmetrisch sind, wobei die genannten Abschnitte radial in wechselnder Richtung magnetisiert sind, wobei das bewegliche Organ (1) um die zentrale Achse dieses Zylinders drehbeweglich ist.

7. Einphasiges elektromagnetisches Betätigungselement nach Anspruch 1 bis 6, dadurch gekennzeichnet, daß das bewegliche Organ (1) von zwei parallelen dünnen Magneten gebildet wird, die jeweils zwei Teile (3, 4) aufweisen, welche quer in wechselnder Richtung magnetisiert sind, und die durch einen Magnetträger (17) verbunden sind, wobei das zwischen diesen dünnen Magneten enthaltene Volumen mindestens teilweise von einem Material von sehr hoher magnetischer Permeabilität ausgefüllt wird.

8. Einphasiges elektromagnetisches Betätigungselement nach Anspruch 1 bis 7, dadurch gekennzeichnet, daß die Führung des Magnetträgers (17) von Säulen (51, 54) gewährleistet wird, die im Innern des Magnetträgers (17) angeordnet sind und mit Kugelhülsen zusammenwirken.

9. Einphasiges elektromagnetisches Betätigungselement nach Anspruch 1 bis 8, dadurch gekennzeichnet, daß mindestens einer der Magnetkreise (7, 8) auf mindestens einer seiner Kanten, die senkrecht zur Bewegungsrichtung des beweglichen Organs (1) und zur Richtung der Magnetisierung sind, eine Abschrägung (22) aufweist, wobei das Betätigungselement außerdem einen Anschlag (30) umfaßt, der eine Bewegung des magnetisierten Teils über die Endzone hinaus, in welcher die Arretierungskraft nachläßt, verbietet.

10. Einphasiges elektromagnetisches Betätigungselement nach Anspruch 1 bis 9, dadurch gekennzeichnet, daß die Länge Y₂ des mittleren Polteils (10) geringer ist als die Längen Y₁ und Y₃ der seitlichen Polteile (9, 11).

11. Elektromagnetisches Betätigungselement nach irgendeinem der Ansprüche 1 bis 10, dadurch gekennzeichnet, daß der Anschlag in einer Entfernung angeordnet ist, die, gemessen ab der äußeren seitlichen Kante des kürzesten Magnetkreises, geringer als die Breite E des Luftspalts ist.

12. Elektromagnetisches Betätigungselement nach irgendeinem der Ansprüche 1 bis 11, dadurch gekennzeichnet, daß der erste Magnetkreis (7) und der zweite Magnetkreis (8) in bezug auf die zur Magnetisierungsrichtung senkrechte Mittelebene des magnetisierten Teils des beweglichen Organs (1) symmetrisch sind.

13. Einphasiges elektromagnetisches Betätigungselement nach irgendeinem der vorhergehenden Ansprüche, dadurch gekennzeichnet, daß das Verhältnis zwischen der Länge Y_{A} des magnetisierten Teils und der Breite E des Luftspalts größer als 4 ist.

14. Einphasiges elektromagnetisches Betätigungselement nach irgendeinem der vorhergehenden Ansprüche, dadurch gekennzeichnet, daß die Länge der Abschrägung (22), gemessen in der Verschiebungsrichtung des beweglichen Organs (1), zwischen 1/5 und 1/20 der Länge Y₁ des entsprechenden Polteils beträgt.

15. Einphasiges elektromagnetisches Betätigungselement nach irgendeinem der Ansprüche 1 bis 14, dadurch gekennzeichnet, daß mindestens eine der seitlichen Kanten von mindestens einem der Magnetkreise (7, 8) und der entsprechende seitliche Rand des magnetisierten Teils zwischen sich einen Winkel bilden, der zwischen 0 und 10 Grad beträgt.

## Claims

1. An electromagnetic one-phase actuator having at least a stable position in the absence of any current, said actuator including a statoric structure and a movable member (1) according to a direction Y, said statoric structure (2) defining a gap arranged between a first magnetic circuit (7) made from very high permeability material and comprising an electrical exciting coil (14) and a second magnetic circuit (8), said first magnetic circuit (7) including a central polar portion (10) having a length Y₂ as measured along the displacement direction Y of said movable member (1) and two lateral polar portions (9, 11) having lengths Y₁ and Y₂ as measured along displacement direction Y of said movable member (1), said movable member (1) being provided with a thin portion (3, 4) magnetized orthogonally to the displacement direction, thereby forming two opposed magnetic pole pairs of a length Y_{A} measured in the displacement direction of said movable member (1), said magnetized thin portion (3, 4) being made of a material showing, in the whole operating range, a substantially linear de-magnetization characteristic, a reversible permeability almost equal to that of air and a uniform magnetization, characterized in that the lengths of polar portions (Y₁, Y₂, Y₃) are at least equal to length Y_{A} of said magnetic pole pair less the length of the notch accomodating said coil, and in that said first magnetic circuit (7) and second magnetic circuit (8) are only connected by non-magnetic parts, the movable member (1) travel on each side of a median position being less than half of the difference between total length of the shortest magnetic circuit measured between both external side edges thereof and total length of magnetized portions (3, 4).

2. The electromagnetic one-phase actuator according to claim 1, characterized in that said movable member (1) includes an angular sector of a disk having two angular sectors which are transversely magnetized in alternate directions, said first magnetic circuit (7) comprises an annular sector of a ring made from a very high permeability material having three portions of the same angular dimensions as said magnetized angular sectors, said first magnetic circuit (7) including an exciting electric coil (14) and a second magnetic circuit (8), said magnetic circuits being connected by non-magnetic spacers.

3. The electromagnetic one-phase actuator according to claim 1, characterized in that said magnetic portion is of tubular shape and includes a first cylindrical portion having any section other than a tubular one (3) which is radially magnetized and a second coaxial portion (4) in the continuation of first portion (3), and radially magnetized in alternate direction, said movable portion axially moving inside the gap delimited by said first magnetic circuit (7) and second magnetic circuit (8).

4. The electromagnetic one-phase actuator according to claim 3, characterized in that said second magnetic circuit (8) includes a cylinder made from very high permeability material.

5. The electromagnetic one-phase actuator according to claim 4, characterized in that said cylinder is integral with said cylindrical magnetized portion (3, 4), the length of said cylindrical magnetic circuit (8) being at least equal to the sum of the length of said first magnetic circuit (7) and of the travel of said movable axle.

6. The electromagnetic one-phase actuator according to claim 1, characterized in that said magnetized portion includes at least two thin cylindrical wall portions, symmetrical about the median generator, said portions being radially magnetized in alternate direction, said movable member (1) being able to rotate around said cylinder central axle.

7. The electromagnetic one-phase actuator according to claims 1-6, characterized in that said movable member (1) comprises two parallel thin magnets each having two alternately transversally magnetized portions (3, 4) which are connected by a magnet support (17), with the volume between both thin magnets being at least partially filled with a very high permeability material.

8. The electromagnetic one-phase actuator according to claims 1-7, characterized in that guiding said magnet support (17) is ensured by columns (51, 54) arranged inside it and cooperating with ball bushes.

9. The electromagnetic one-phase actuator according to claims 1-8, characterized in that at least one of said magnetic circuits (7, 8) includes a chamfer (30) on at least one of edges thereof orthogonal to said movable member (1) displacement direction and to the magnetization direction, said actuator further including a stop (30) which prevents said magnetized portion from moving beyong end region where the releasing force decreases.

10. The electromagnetic one-phase actuator according to claims 1-9, characterized in that length Y₂ of said central polar portion (10) is less than lengths Y₁ and Y₃ of lateral polar portions (9, 11).

11. The electromagnetic one-phase actuator according to any claim 1-10, characterized in that said stop is located at a distance as measured from the externed lateral edge of the shortest magnetic circuit lower than width E of said gap.

12. The electromagnetic one-phase actuator according to any claim 1-11, characterized in that both first magnetic circuit (7) and second magnetic circuit (8) are symmetrical about the median plane of the magnetized portion which is perpendicular to the magnetizing direction.

13. The electromagnetic one-phase actuator according to any preceding claim, characterized in that the ratio between length Y_{A} of the magnetized portion and thickness E of the gap is higher than 4.

14. The electromagnetic one-phase actuator according to any preceding claim, characterized in that length, as measured in the displacement direction of said movable member (1), of said chamfer (22) is from 1/5 to 1/20 of length Y₁ of the corresponding polar portion.

15. The electromagnetic one-phase actuator according to any claim 1-14, characterized in that at least one of said lateral edges of at least one of said magnetic circuits (7, 8) and the corresponding lateral edge of said magnetized portion show between them an angle from 0 to 10 degrees.
